# EUROPÄISCHE PATENTANMELDUNG

(11) **EP 1 759 762 A2**
(43) Veröffentlichungstag der Anmeldung: **07.03.2007**
(21) Anmeldenummer: 06119809.9
(22) Anmeldetag: 30.08.2006
(51) Int. Cl.: B01J 21/16, B01D 46/24, B01D 53/94, F01N 3/022

(54) **Verfahren zur Herstellung eines Filterelements und einer Trägerstruktur für einen Katalysator mit verbesserter Beständigkeit gegen Alkali- und Erdalkaliionen**

(30) Priorität: 06.09.2005 DE 102005042206; 31.03.2006 DE 102006014999
(71) Anmelder: ROBERT BOSCH GMBH, 70442 Stuttgart (DE)
(72) Erfinder: Koehler, Michael, 71636 Ludwigsburg (DE); Eisele, Ulrich, 70199 Stuttgart (DE); Schumann, Bernd, 71277 Rutesheim (DE); Jockel, Joerg, 70839 Gerlingen (DE); Thuener, Lars, 70499 Stuttgart (DE); Kruse, Matthias, 70499 Stuttgart (DE); Mattern, Andreas, 76137 Karlsruhe (DE); Martin, Alexander, 70469 Stuttgart (DE)

(57) **Zusammenfassung**

Es werden Verfahren vorgeschlagen, welche die unerwünschlen Reaktionen von im Abgas enthaltenen Alkaliionen und Erdalkaliionen mit einem keramischen Körpers aus Cordierit, insbesondere einem Filterelement oder der Trägerstruktur eines Katalysators für eine Brennkraftmaschine, unterbinden.

## Beschreibung

### Stand der Technik

Die Erfindung betrifft Verfahren zur Herstellung von keramischen Körpern mit verbesserter Temperaturfestigkeit und Keramische Körper, insbesondere Filterelement und Trägerstrukturen für Abgasnachbehandlungseinrichtungen für eine Brennkraftmaschine.

Filterelemente für Partikelfilter von Dieselbrennkraftmaschinen und die Trägerstrukturen von Katalysatoren für Brennkraftmaschinen werden häufig aus Magnesium-AluminiumSilikaten, bevorzugt Cordierit, hergestellt. Reines Magnesium-Aluminium-Silikat, bevorzugt Cordierit, hat einen sehr kleinen thermischen Ausdehnungskoeffizienten und weist somit eine gute Beständigkeit gegen plötzliche Temperaturänderungen (Thermoschocks) auf.

Bei der kontinuierlichen oder zyklischen Regeneration der Filterelemente können Temperaturen von über 1.000° Celsius auftreten, da die Regeneration von Ruß exotherm ist. Da die Rußverteilung innerhalb des Filterelements nicht homogen ist und außerdem die Möglichkeiten der Wärmeabfuhr lokal unterschiedlich sind, entstehen bei der Regeneration lokale Temperaturunterschiede im Filterelement

Bislang wird die Lebensdauer von Partikelfiltern aus Magnesium-Aluminium-Silikaten, bevorzugt Cordierit, unter anderem dadurch begrenzt, dass das Magnesium-Aluminium-Silikat, bevorzugt Cordierit, mit den im Abgas enthaltenen Alkalien, insbesondere Natrium und Kalium, oder Erdalkalien, reagiert. Bei dieser Reaktion entstehen zusätzliche Phasen, wie zum Beispiel Nephelin, die einen größeren Wärmeausdehnungskoeffizient als Magnesium-Aluminium-Silikat, bevorzugt Cordierit, haben. Dadurch entstehen infolge der lokalen Temperaturunterschiede im Filterelement Wärmespannungen, die zu Rissen im Filterelement und damit zu dessen Zerstörung führen können.

Der Erfindung liegt die Aufgabe zugrunde, Verfahren zur Herstellung eines Filterelements und ein Filterelement bereitzustellen, das beständiger gegen die von den im Abgas enthaltenen Alkalien oder Erdalkalien ausgelösten Reaktionen sind und infolgedessen höhere Betriebstemperaturen erlauben, ohne Schaden zu nehmen.

Diese Aufgabe wird erfindungsgemäß gelöst mit einem Verfahren zur Herstellung von keramischen Körpern aus Magnesium-Aluminium-Silikat, bevorzugt Cordierit, bei welchem ein Körper aus Magnesium-Aluminium-Silikat geformt wird, dieser Körper gesintert wird und anschließend der Körper mit einer Schutzschicht zum Schutz des Magnesium-Aluminium-Silikats gegen im Abgas enthaltene Alkaliionen und/oder Erdalkaliionen beschichtet wird.

### Vorteile der Erfindung

Durch die erfindungsgemäße Beschichtung ist es möglich, die unvermeidbaren Alkali- und Erdalkaliionen im Abgas weitestgehend unschädlich zu machen, so dass die genannten Ionen nicht mit dem Magnesium-Aluminium-Silikat reagieren und infolgedessen auch keine zusätzlichen Phasen gebildet werden, die einen gegenüber Magnesium-Aluminium-Silikat, bevorzugt Cordierit, erhöhten Wärmeausdehnungskoeffizienten aufweisen.

Dadurch bleibt der Wärmeausdehnungskoeffizient des Filterelements über die gesamte Lebensdauer unverändert, so dass die Hochtemperaturfestigkeit des nach dem erfindungsgemäßen Verfahren hergestellten Körpers erhöht wird und über die gesamte Lebensdauer des Körpers konstant bleibt.

Im Folgenden wird stets von einem Körper oder einem keramischen Körper gesprochen, da die Anwendung der erfindungsgemäßen Verfahren nicht auf Filterelemente für Brennkraftmaschinen beschränkt ist, sondern beispielsweise auch bei der Herstellung von Trägerstrukturen für Katalysatoren von Brennkraftmaschinen und anderen temperaturbelasteten keramischen Bauteilen, die einem Angriff durch Alkali- oder Erdalkaliionen ausgesetzt sind, anwendbar ist.

Bei einer vorteilhaften Variante der Erfindung besteht die Schutzschicht aus Magnesium-Aluminium-Silikat, bevorzugt Cordierit, das mit einem oder mehreren Glasbildnern dotiert ist. Besonders bevorzugt werden als Glasbildner Titanate, Silikat, Alumosilikate, Borate und/oder Phosphate eingesetzt. Dabei hat es sich als besonders vorteilhaft erwiesen, wenn die Glasbildner zusammen mit Stoffen enthaltend Kalzium und/oder Aluminium eingesetzt werden.

Wenn der Körper mit einer Schutzschicht aus Magnesium-Aluminium-Silikat, bevorzugt Cordierit, und einem oder mehreren Glasbildnern beschichtet wird, wird im Anschluss an die Beschichtung eine Wärmebehandlung durchgeführt, die zum Sintern des in der Schutzschicht enthaltenen Magnesium-Aluminium-Silikats, bevorzugt Cordierit, führt, so dass im Ergebnis die Schutzschicht sehr fest mit dem ebenfalls aus Magnesium-Aluminium-Silikat, bevorzugt Cordierit, bestehenden Körper verbunden ist. Wegen der gleichen Grundstoffe der Schutzschicht und des Körpers sind auch keine chemischen Reaktionen zwischen der Schutzschicht und dem eigentlichen Filterelement zu erwarten.

Die in der Schutzschicht vorhandenen Glasbildner bilden zusammen mit dem im Abgas enthaltenen Alkali- und Erdalkaliionen Gläser an der Beschichtungsoberfläche. Dadurch wird verhindert, dass die Ionen in das Substrat beziehungsweise den keramischen Körper eindiffundieren und den keramischen Körper schädigen. Es versteht sich von selbst, dass die dabei entstehenden Gläser die Filtereigenschaften des Körpers nicht negativ beeinflussen sollen. Mit Hilfe der erfindungsgemäßen Beschichtung können vor allem Na⁺-Ionen effektiv abgefangen werden.

Grundsätzlich gilt bei allen beschichteten keramischen Körpern, dass deren Porosität in Abhängigkeit von den Eigenschaften der Schutzschicht etwas größer sein sollte, um die Verringerung der Porosität durch die Beschichtung auszugleichen.

Als weitere sehr vorteilhafte Variante des erfindungsgemäßen Verfahrens hat sich eine Schutzschicht aus Aluminiumoxidhydrat, das durch einen Alterungsprozess kristallisiert, bevorzugt Böhmit oder Bayerit, erwiesen, wobei die Schutzschicht nach dem Aufbringen auf den Körper durch eine Wärmebehandlung in γ-Aluminiumoxid umgewandelt wird. Diese Wärmebehandlung kann ein Sintervorgang sein und führt dazu, dass eine Schutzschicht aus γ-Aluminiumoxid entsteht. Diese dünne Schutzschicht führt dazu, dass die genannten Ionen nicht in die keramische Struktur des Körpers eindringen können und dort demzufolge auch keine Phasenumwandlungen in dem Magnesium-Aluminium-Silikat, bevorzugt Cordierit, auslösen können.

Es hat sich als besonders vorteilhaft herausgestellt, wenn das Aluminiumoxidhydrat, bevorzugt Böhmit, in Form von Nanopartikeln, insbesondere mit Durchmessern zwischen 8 nm und 25 nm, auf den Körper aufgebracht wird. Dies ist beispielsweise dadurch möglich, dass eine Suspension aus Wasser oder verdünnten Säuren, wie HCl, HNO₃ und/oder Essigsäure, und den Nanopartikeln aus Böhmit gebildet wird und diese Suspension auf den Körper aufgebracht wird. Die Durchmesser der Nanopartikel aus Böhmit beeinflussen Dichte und Dicke der entstehenden Schutzschicht und es hat sich bei praktischen Versuchen als besonders vorteilhaft erwiesen, wenn die Durchmesser in dem angegebenen Bereich liegen.

Eine weitere vorteilhafte Ausgestaltung des erfindungsgemäßen Verfahrens sieht vor, dass die Schutzschicht aus Oxiden der Elemente der vierten und fünften Nebengruppe eingesetzt werden. Des Weiteren ist es auch möglich, Oxide der Elemente der sechsten Nebengruppe einzusetzen.

Als vorteilhaft anwendbare Oxide haben sich Zirkoniumoxid, Titanoxid, Hafniumoxid, Nioboxid, Tantaloxid, Dichromtrioxid und/oder Wolframtrioxid erwiesen.

Bei allen zuvor genannten Beschichtungen ist es möglich und vorteilhaft, die Schutzschicht in Form einer Suspension auf den Körper aufzubringen. Dabei kann die Beschichtung durch einfaches Tauchen oder durch Durchsaugen auf den Körper aufgebracht werden. Alternativ ist es auch möglich, die Beschichtung durch einen Sol-Gel-Prozess auf den Körper aufzubringen.

Es ist erfindungsgemäß sowohl möglich, die Beschichtung auf den Körnern des keramischen Körpers aufzubringen, als auch die Beschichtung in den Poren zwischen den Körnern des Körpers aufzubringen.

In vielen Fällen hat es sich als vorteilhaft erwiesen, wenn nach dem Aufbringen der Schutzschicht eine Wärmebehandlung durchgeführt wird. Dies ist, insbesondere wenn die Schutzschicht aus Magnesium-Aluminium-Silikat, bevorzugt Cordierit, sowie Glasbildnern oder aus Böhmit besteht, von besonderer Bedeutung, um die Ausbildung einer festen und chemisch resistenten Schutzschicht zu gewährleisten.

Die eingangs genannte Aufgabe wird erfindungsgemäß bei einem keramischen Körper aus Magnesium-Aluminium-Silikat, bevorzugt Cordierit, insbesondere für ein Filterelement oder eine Trägerstruktur eines Katalysators einer Abgasnachbehandlungseinrichtung einer Brennkraftmaschine dadurch gelöst, dass er nach einem der vorhergehenden Verfahren hergestellt ist.

Die der Erfindung zu Grunde liegende Aufgabe wird ebenfalls gelöst durch die Gegenstände der nebengeordneten Ansprüche 20 bis 23 und 25. Bei dem keramischen Körper aus Magnesium-Aluminium-Silikat, bevorzugt Cordierit, gemäß dem nebengeordneten Anspruch 21 ist eine Schutzschicht nicht erforderlich, da dem Magnesium-Aluminium-Silikat vor dem Sintern Oxide der Elemente der 4. bis 6. Nebengruppe zugeführt werden, so dass die Wirkung der erfindungsgemäß beanspruchten Oxide innerhalb des gesamten Körpers zum Tragen kommen.

### Zeichnungen

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

### Zeichnungen

Es zeigen:
- Figur 1: eine schematische Darstellung einer Brennkraftmaschine mit einer erfindungsgemäßen Abgasnachbehandlungseinrichtung,
- Figur 2: ein erfindungsgemäßes Filterelement im Längsschnitt, und
- Figuren 3 bis 5: Ablaufdiagramme von Ausführungsbeispielen erfindungsgemäßer Verfahren
- Figur 6: die Struktur eines beschichteten erfindungsgemäßen Körpers.

### Beschreibung der Ausführungsbeispiele

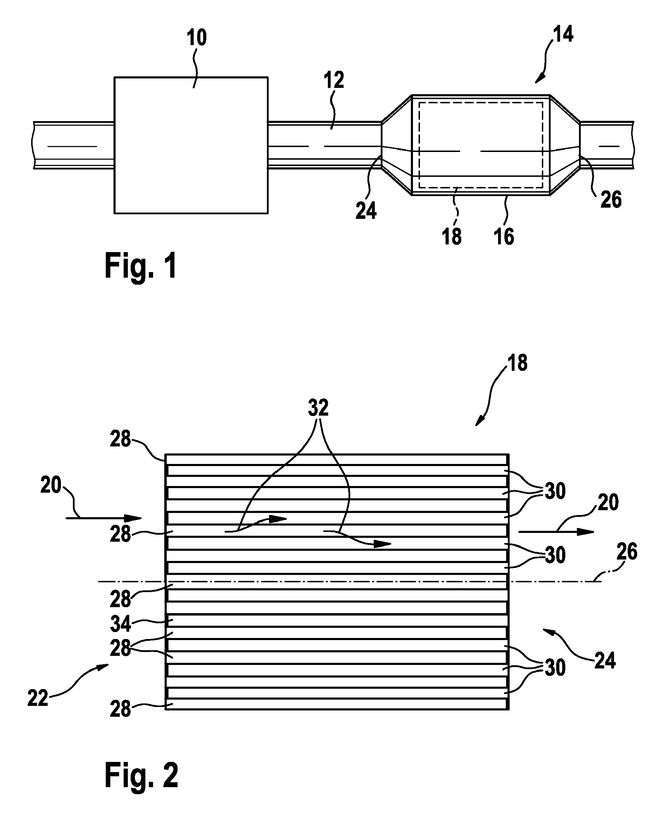

In Figur 1 trägt eine Brennkraftmaschine das Bezugszeichen 10. Die Abgase werden über ein Abgasrohr 12 abgeleitet, in dem eine Filtereinrichtung 14 angeordnet ist. Mit dieser werden Rußpartikel aus dem im Abgasrohr 12 strömenden Abgas herausgefiltert. Dies ist insbesondere bei DieselBrennkraftmaschinen erforderlich, um gesetzliche Bestimmungen einzuhalten.

Die Filtereinrichtung 14 umfasst ein zylindrisches Gehäuse 16, in dem eine im vorliegenden Ausführungsbeispiel rotationssymmetrisches, insgesamt ebenfalls zylindrisches Filterelement 18 angeordnet ist.

In Figur 2 ist ein Querschnitt ein Filterelement 18 nach dem Stand der Technik dargestellt. Das Filterelement 18 ist als extrudierter Formkörper aus einem keramischen Material, wie zum Beispiel Magnesium-Aluminium-Silikat, bevorzugt Cordierit, hergestellt. Das Filterelement 18 wird in Richtung der Pfeile 20 von nicht dargestelltem Abgas durchströmt. Eine Eintrittsfläche hat in Figur 2 das Bezugszeichen 22, während eine Austrittsfläche in Figur 2 das Bezugszeichen 24 hat.

Parallel zu einer Längsachse 26 des Filterelements 18 verlaufen mehrere Eintrittskanäle 28 im Wechsel mit Austrittskanälen 30. Die Eintrittskanäle 28 sind an der Austrittsfläche 24 verschlossen. Die Verschlussstopfen sind in Figur 2 ohne Bezugszeichen dargestellt. Im Gegensatz dazu sind die Austrittskanäle 30 an der Austrittsfläche 24 offen und im Bereich der Eintrittsfläche 22 verschlossen.

Der Strömungsweg des ungereinigten Abgases führt also in einen der Eintrittskanäle 28 und von dort durch eine Filterwand (ohne Bezugszeichen) in einen der Austrittskanäle 30. Exemplarisch ist dies durch die Pfeile 32 dargestellt.

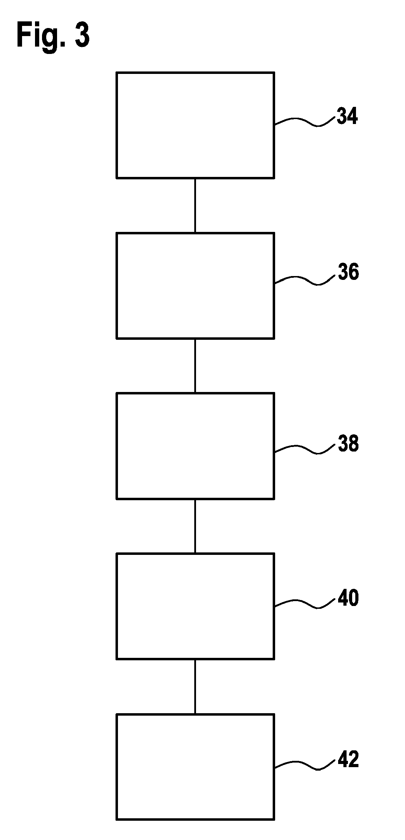

In Figur 3 ist ein Ablaufdiagramm eines ersten Ausführungsbeispiels eines erfindungsgemäßen Verfahrens dargestellt. In einem ersten Schritt 34 werden die Grundstoffe des Magnesium-Aluminium-Silikats, bevorzugt Cordierit, insbesondere Al₂O₃, SiO₂ und MgO, pulverförmig gemahlen und in der gewünschten Zusammensetzung gemischt.

Aus dem im ersten Schritt 34 gewonnenen Pulver wird in einem zweiten Schritt 36 ein Körper der gewünschten Form, beispielsweise durch Extrudieren oder einen anderen formgebenden Prozess, hergestellt. Bei Bedarf kann dieser Körper vorgetrocknet werden und anschließend in einem dritten Schritt 38 gesintert werden.

In einem vierten Schritt 40 wird eine erfindungsgemäße Schutzschicht aufgebracht, die aus Magnesium-Aluminium-Silikat, bevorzugt Cordierit, besteht, welches mit Glasbildnern dotiert ist. Die Beschichtung kann durch Tauchen, Durchsaugen oder auf andere Weise erfolgen.

Anschließend wird der solcherart beschichtete Körper in einem fünften Schritt 42 einer weiteren Wärmebehandlung, insbesondere einem zweiten Sinterprozess unterworfen, so dass das in der Schutzschicht enthaltene Magnesium-Aluminium-Silikat eine feste Verbindung mit dem Substrat des Körpers eingeht.

Das erfindungsgemäße Verfahren ist sehr kostengünstig, da es ausreicht, dem Magnesium-Aluminium-Silikat der Schutzschicht eine geringe Menge von Glasbildnern zuzusetzen.

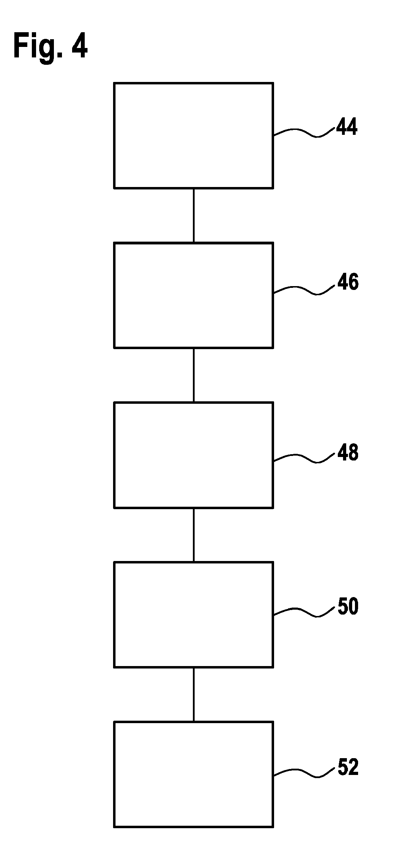

In Figur 4 ist ein Ablaufdiagramm eines weiteren Ausführungsbeispiel eines erfindungsgemäßen Verfahrens dargestellt. In einem ersten Schritt 44 werden die Grundstoffe des Magnesium-Aluminium-Silikats, bevorzugt Cordierit, insbesondere Al₂O₃, SiO₂ und MgO, pulverförmig gemahlen und in der gewünschten Zusammensetzung gemischt.

Aus dem im ersten Schritt 44 gewonnenen Pulver wird in einem zweiten Schritt 46 ein Körper der gewünschten Form, beispielsweise durch Extrudieren oder einen anderen formgebenden Prozess hergestellt. Bei Bedarf kann dieser Körper vorgetrocknet werden und anschließend in einem dritten Schritt 48 gesintert werden.

Anschließend wird in einem vierten Schritt 50 auf den Körper eine Suspension aus Böhmit-Nanopartikeln mit einem Durchmesser von 8 nm bis 25 nm und Wasser oder verdünnter Säure aufgebracht und in einem fünften Schritt 52 einer Wärmebehandlung unterzogen. Dadurch wird das Aluminiumoxidhydrat, bevorzugt Böhmit oder Bayerit, dehydriert, so dass sich eine sehr dünne Schutzschicht aus Aluminiumoxid (Al₂O₃) ausbildet. Diese dünne Schutzschicht verhindert das Eindringen von Alkaliionen und/oder Erdalkaliionen in den keramischen Körper, so dass es nicht zu der unerwünschten Ausbildung einer zweiten Phase mit erheblich höherem Wärmeausdehnungskoeffizienten kommt.

Alternativ können anstelle von einer Schutzschicht aus Aluminiumoxidhydrat, bevorzugt Böhmit oder Bayerit, auch eine Beschichtung aus Oxiden der Elemente der vierten und fünften Nebengruppen, aber auch mit Oxiden der Elemente der sechsten Nebengruppe, aufgebracht werden. Diese Beschichtung kann beispielsweise in Form einer Suspension auf dem keramischen Körper aufgebracht werden oder mit Hilfe eines Sol-Gel-Prozesses auf dem keramischen Körper aufgebracht werden.

Anschließend wird der solcherart beschichtete keramische Körper, wie bereits erwähnt, einer Wärmebehandlung unterzogen, so dass sich die Schutzschicht ausbildet und fest mit dem keramischen Körper verbindet.

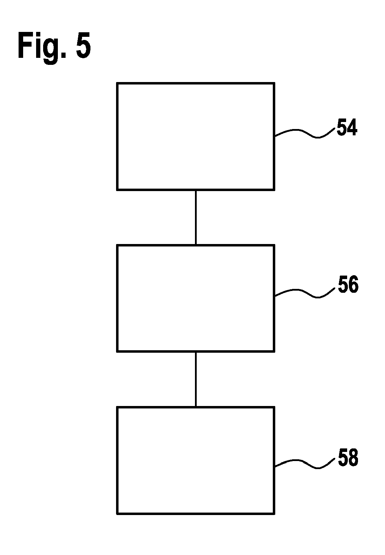

In Figur 5 ist ein Ablaufdiagramm eines weiteren erfindungsgemäßen Verfahrens dargestellt. In einem ersten Schritt 54 werden die Grundstoffe des Magnesium-Aluminium-Silikats, bevorzugt Cordierit, pulverförmig gemahlen und in der gewünschten Zusammensetzung gemischt. Des Weiteren werden die genannten Oxide aus Elementen der vierten Nebengruppe, der fünften Nebengruppe und/oder der sechsten Nebengruppe diesem Pulver zugegeben. Daraus wird in einem zweiten Schritt 56 ein Körper der gewünschten Form hergestellt. Bei Bedarf kann dieser Körper vorgetrocknet werden und anschließend in einem dritten Schritt 58 gesintert werden. Bei diesem erfindungsgemäßen Verfahren kann auf eine Schutzschicht verzichtet werden, da die Stoffe, welche die unerwünschten Reaktionen der Alkaliionen und der Erdalkaliionen im Abgas verhindern, in dem keramischen Körper vorhanden sind. Dieses Verfahren ist besonders einfach in der Durchführung und verursacht keine nennenswerten Mehrkosten gegenüber der Herstellung herkömmlicher keramischer Körper aus Cordierit.

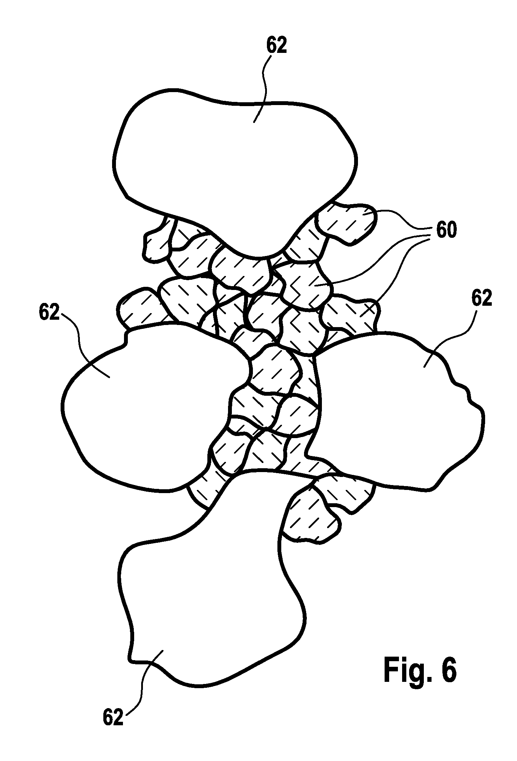

In Figur 6 ist stark vergrößert die Struktur eines mit einer erfindungsgemäßen Schutzschicht versehenen porösen keramischen Körpers stark vereinfacht und vergrößert dargestellt. Die Körner des keramischen Körpers sind in Figur 6 schraffiert dargestellt und teilweise mit dem Bezugszeichen 60 versehen. Zwischen den Körnern 60 sind Poren 62 ausgebildet. Die erfindungsgemäße Schutzschicht ist in Figur 6 als dicke schwarze Linie dargestellt. Aus Figur 6 wird deutlich, dass sowohl die Körner 60 als auch das Innere der Poren 62 von der erfindungsgemäßen Schutzschicht (ohne Bezugszeichen) überzogen sind.

In einer alternativen Ausführungsform oder in Kombination mit den vorhergehend beschriebenen Varianten der Imprägnierung kann der Körper aus Magnesium-Aluminium-Silikat auch mit insbesondere imprägnierten Fasern beschichtet werden, um neben einer Erhöhung der Filtrationsoberfläche gleichzeitig einen Schutz gegen Alkali- und Erdalkaliionen zu erzielen, die ansonsten durch Aufnahme aus dem Abgas und Einbau in das Substrat den Schmelzpunkt von Cordierit herabsetzen und dessen Temperaturbeständigkeit reduzieren würden. Die Fasern bestehen im Wesentlichen, insbesondere zu über 95 Prozent, aus η - Aluminiumoxid und aus einem drei bis fünfprozentigem Anteil von Siliziumdioxid. Die Fasern haben beispielsweise einen Durchmesser zwischen 3 bis 5 Mikrometer und eine Länge größer als 150 Mikrometer, wodurch sich eine Faserschichtporosität oberhalb von 90 Prozent ergeben kann. Die keramischen Fasern können beispielsweise mit Calcium-, Magnesium-, Eisen- oder Aluminium-Ionen imprägniert werden, so dass sich in Verbindung mit dem Siliziumdioxid-Anteil der Fasern eine Natrium-Ionen einfangende Wirkung der Faserschicht entfalten kann. Dabei werden Natrium-Ionen aus dem Abgas unter Bildung schwerlöslicher Silikate, insbesondere Glimmer oder Zeolith, abgefangen, wodurch sich der Einbau von Natrium-Ionen in das Substrat vermindert und somit die Schmelztemperatur des Cordierit-Substrats im Laufe des Betriebs nicht absinken kann.

In weiteren alternativen Ausführungsformen kommen neben Aluminiumoxidhydraten, beispielsweise Böhmit, und Oxiden der Elemente der 4. bis 6. Nebengruppe des Periodensystems der chemischen Elemente, insbesondere Ceroxid, Zirkonoxid, Titanoxid, Hafniumoxid, Nioboxid, Tantaloxid, Dichromtrioxid und Wolframtrioxid, auch folgende Stoffe als Schutzschichtmaterialien in Frage:
- Seltenerdphosphate, beispielsweise Monazit mit der Zusammen setzung (Ce, La, Nd)PO₄;
- insbesondere die sehr vorteilhaften Alkali- und Erdalkali-Zirkonphosphate, zum Beispiel Natriumzirkonphosphat (NZP) oder Strontiumzirkonphosphat; diese Stoffe verfügen über einen ähnlich niedrigen Wärmeausdehnungskoeffizient wie das Substratmaterial und eine gute Thermowechselbeständigkeit und werden durch die bereits enthaltenen Alkali- und Erdalkaliionen von diesen nicht weiter angegriffen;
- oxidische Perowskite mit den Kristallstrukturen ABO₃, A₁₋ₓA'ₓBO₃, A₁₋ₓA'ₓB_{1-y}B'_{y}O₃, wobei
   A = Seltenerdelement, insbesondere La, Ce, Pr, Nd, Sm, Eu, Gd und
   B = Ti, Zr, Hf, Sn, Ce, Tc, Mn, Fe, Co, bzw. wobei
   A = Seltenerdelement, insbesondere La, Ce, Pr, Nd, Sm, Eu, Gd;
   A'= Ca, Sr, Ba, La, Ce, Pr, Nd,
   B = B'= Zr, Al, Sc, V, Cr, Mn, Fe, Co, Ga, Ni.

Ceroxid und Perowskite haben den zusätzlichen Vorteil, dass sie als Sauerstoffspeicher dienen und Oxidationsreaktionen katalysieren, ähnlich wie bekannte Washcoat-Beschichtungen.

Der Anteil einer Beschichtung an der Gesamtmasse des Körpers soll in vorteilhafter Weise ausreichen, um das Substrat zu bedecken. Andererseits darf er nicht zu groß sein, um die Eigenschaften nicht zu stark zu beeinflussen. Beispielsweise kann in Abhängigkeit vom Beschichtungsmaterial ein Anteil von 5 bis 25 Masseprozent bezogen auf die Substratmasse gewählt werden.

## Patentansprüche

1. Verfahren zur Herstellung von Körpern aus Magnesium-Aluminium-Silikat, bevorzugt Cordierit, **gekennzeichnet durch** folgende Verfahrensschritte:
Formen eines Körpers aus Magnesium-Aluminium-Silikat, bevorzugt Cordierit,
Sintern des Körpers und
Beschichten des Körpers mit einer Schutzschicht zum Schutz des Magnesium-Aluminium-Silikats gegen im Abgas enthaltene Alkaliionen und/oder Erdalkaliionen.

2. Verfahren nach Anspruch 1, **dadurch gekennzeichnet, dass** die Schutzschicht aus Magnesium-Aluminium-Silikat, bevorzugt Cordierit, besteht, und dass das in der Schutzschicht enthaltene Magnesium-Aluminium-Silikat mit einem oder mehreren Glasbildnern dotiert ist.

3. Verfahren nach Anspruch 2, **dadurch gekennzeichnet, dass** als Glasbildner Titanate, Silikate, Alumosilikate, Borate und/oder Phosphate eingesetzt werden.

4. Verfahren nach Anspruch 3, **dadurch gekennzeichnet, dass** die Glasbildner zusammen mit Stoffen enthaltend Calcium (Ca) und/oder Aluminium (Al) eingesetzt werden.

5. Verfahren nach Anspruch 1, **dadurch gekennzeichnet, dass** die Schutzschicht aus Aluminiumoxidhydrat, bevorzugt Böhmit, besteht, und dass die Schutzschicht nach dem Aufbringen auf dem Körper durch eine Wärmebehandlung in γ- Aluminiumoxid umgewandelt wird.

6. Verfahren nach Anspruch 5, **dadurch gekennzeichnet, dass** das Aluminiumoxidhydrat, bevorzugt Böhmit, in Form von Nanopartikeln, insbesondere mit Durchmessern zwischen 8 nm und 25 nm, auf den Körper aufgebracht wird.

7. Verfahren nach Anspruch 5 oder 6, **dadurch gekennzeichnet, dass** das Aluminiumoxidhydrat, bevorzugt Böhmit, in Form einer Suspension in Wasser oder in verdünnter Säure, bevorzugt HCl, HNO₃ und/oder Essigsäure, auf den Körper aufgebracht wird.

8. Verfahren nach Anspruch 1, **dadurch gekennzeichnet, dass** die Schutzschicht aus Oxiden der Elemente der 4. Nebengruppe, der 5. Nebengruppe und/oder 6. Nebengruppe besteht.

9. Verfahren nach Anspruch 8, **dadurch gekennzeichnet, dass** Zirkoniumoxid (ZrO₂), Titanoxid (TiO₂), Hafniumoxid (HfO₂), Nioboxid (Nb₂O₅), Tantaloxid (Ta₂O₅), Dichromtrioxid (Cr₂O₃) und/oder Wolframtrioxid (WO₃) eingesetzt werden.

10. Verfahren nach Anspruch 1, **dadurch gekennzeichnet, dass** die Schutzschicht aus einem Seltenerdphosphat, insbesondere Monazit mit der Zusammensetzung (Ce, La, Nd)PO₄ besteht.

11. Verfahren nach Anspruch 1, **dadurch gekennzeichnet, dass** die Schutzschicht aus einem Ceroxid besteht.

12. Verfahren nach Anspruch 1, **dadurch gekennzeichnet, dass** die Schutzschicht aus einem Alkali- und/oder Erdalkalizirkonphosphat, insbesondere Natriumzirkonphosphat oder Strontiumzirkonphosphat, besteht.

13. Verfahren nach Anspruch 1, **dadurch gekennzeichnet, dass** die Schutzschicht aus einem oxidischen Perowskit besteht.

14. Verfahren nach einem der vorhergehenden Ansprüche, **dadurch gekennzeichnet, dass** die Schutzschicht in Form einer Suspension auf den Körper (18) aufgebracht wird.

15. Verfahren nach einem der vorhergehenden Ansprüche, **dadurch gekennzeichnet, dass** die Beschichtung durch Tauchen, Durchsaugen oder einen Sol-Gel-Prozess auf den Körper (18) aufgebracht wird.

16. Verfahren nach einem der vorhergehenden Ansprüche, **dadurch gekennzeichnet, dass** die Beschichtung auf den Körnern des Körpers (18) aufgebracht wird.

17. Verfahren nach einem der vorhergehenden Ansprüche, **dadurch gekennzeichnet, dass** die Beschichtung in den Poren zwischen den Körnern des Körpers (18) aufgebracht wird.

18. Verfahren nach einem der vorhergehenden Ansprüche, **dadurch gekennzeichnet, dass** nach dem Aufbringen der Schutzschicht eine Wärmebehandlung durchgeführt wird.

19. Verfahren nach einem der vorhergehenden Ansprüche, **dadurch gekennzeichnet, dass** die Schutzschicht Fasern enthält.

20. Keramischer Körper aus Magnesium-Aluminium-Silikat, bevorzugt Cordierit, insbesondere Filterelement (18) oder eine Trägerstruktur eines Katalysators für eine Abgasnachbehandlungseinrichtung einer Brennkraftmaschine, **dadurch gekennzeichnet, dass** er nach einem der vorhergehenden Verfahren hergestellt ist.

21. Keramischer Körper aus Magnesium-Aluminium-Silikat, bevorzugt Cordierit, insbesondere Filterelement (18) oder eine Trägerstruktur eines Katalysators für eine Abgasnachbehandlungseinrichtung einer Brennkraftmaschine, **dadurch gekennzeichnet, dass** er eine Beschichtung aufweist, und dass die Beschichtung Magnesium-Aluminium-Silikat, bevorzugt Cordierit, und Glasbildner enthält.

22. Keramischer Körper aus Magnesium-Aluminium-Silikat, bevorzugt Cordierit, insbesondere Filterelement (18) oder eine Trägerstruktur eines Katalysators für eine Abgasnachbehandlungseinrichtung einer Brennkraftmaschine, **dadurch gekennzeichnet, dass** er eine Beschichtung aufweist, und dass die Beschichtung aus γ- Aluminiumoxid besteht.

23. Keramischer Körper aus Magnesium-Aluminium-Silikat, bevorzugt Cordierit, insbesondere Filterelement (18) oder eine Trägerstruktur eines Katalysators für eine Abgasnachbehandlungseinrichtung einer Brennkraftmaschine, **dadurch gekennzeichnet, dass** er eine Beschichtung aufweist, und dass die Beschichtung aus Oxiden der 4. bis 6. Nebengruppe besteht.

24. Keramischer Körper nach einem der Ansprüche 20 bis 23, **dadurch gekennzeichnet, dass** der Körper ohne die Beschichtung eine Porosität von 55% bis 65%, bevorzugt eine Porosität von etwa 60%, aufweist.

25. Keramischer Körper aus Magnesium-Aluminium-Silikat, bevorzugt Cordierit, insbesondere Filterelement (18) oder eine Trägerstruktur eines Katalysators für eine Abgasnachbehandlungseinrichtung einer Brennkraftmaschine, **dadurch gekennzeichnet, dass** dem Magnesium-Aluminium-Silikat, bevorzugt Cordierit, vor dem Sintern Oxide der 4. bis 6. Nebengruppe zugemischt werden.
